# EUROPEAN PATENT SPECIFICATION

(11) **EP 3 976 364 B1**
(45) Date of publication and mention of the grant of the patent: **05.07.2023**
(21) Application number: 20731965.8
(22) Date of filing: 29.05.2020
(51) Int. Cl.: B29D 30/06, B29D 30/72

(54) **PROCESS AND APPARATUS FOR PRODUCING TYRES FOR VEHICLES WHEELS**
VERFAHREN UND VORRICHTUNG ZUR HERSTELLUNG VON REIFEN FÜR FAHRZEUGRÄDER
PROCÉDÉ ET APPAREIL POUR LA PRODUCTION DE PNEUS POUR ROUES DE VÉHICULES

(30) Priority: 31.05.2019 IT 201900007692
(43) Date of publication of application: 06.04.2022
(73) Proprietor: Pirelli Tyre S.p.A., 20126 Milano (IT)
(72) Inventor: DE CANCELLIS, Pier Luigi, 20126 Milano (IT); BALINI, Alfredo, 20126 Milano (IT); MAZZOCCHI, Oscar, 20126 Milano (IT); AVANZINI, Lorenzo, 20126 Milano (IT); CONTI, Davide Lupo, 20126 Milano (IT)
(74) Representative: Porta & Consulenti Associati S.p.A.
(86) International application number: PCT/IB2020/055102
(87) International publication number: WO 2020/240487

(56) References cited:
- US-A- 5 058 647
- US-A1- 2017 361 663

## Description

The present invention relates to a process and an apparatus for producing tyres for vehicle wheels.

Preferably, the tyres produced in accordance with the present invention are intended to be mounted on wheels of sports automobiles, in particular high and ultra-high performance automobiles, and are commonly defined as "HP" or "UHP" tyres. In particular they are tyres that allow speeds of over 200 km/h, up to more than 300 km/h, to be reached. Examples of such tyres are those belonging to classes "T", "U", "H", "V", "Z", "W", "Y" according to the E.T.R.T.O. (European Tyre and Rim Technical Organization) standard and racing tyres, in particular for high-piston displacement four-wheeled vehicles. Typically, tyres belonging to such classes have section width equal to or greater than 185 mm, preferably comprised between 195 mm and 385 mm, more preferably comprised between 195 mm and 355 mm. Such tyres are preferably mounted on rims having fitting diameters equal to or greater than 13 inches, preferably not greater than 24 inches, more preferably comprised between 16 inches and 23 inches.

The tyres produced in accordance with the present invention have, on at least one of the sidewalls thereof, one or more white or colored decorative elements, like for example at least one white or colored label (hereinafter also simply indicated as "label").

### PRIOR ART

Tyres for vehicle wheels comprising one or more white or colored decorative elements arranged on the sidewall of the tyre itself are known in the art.

US 5300164, US 6030676, US 6080465, US 8834974 describe solutions which provide for the application, on a sidewall of a tyre that is already vulcanized, of a paint or layer of adhesive cross-linkable polymeric material comprising colored or white pigments and the subsequent cross-linking of such a layer of polymeric material.

US 8037916, US 7387144 and US 2017/0361663 describe solutions in which colored labels consisting of one or more colored layers and an adhesive layer are applied on the sidewalls of the vulcanized tyres.

US 5474645, US 2007/256771, US 2004/103974, US 2016/032151, EP 2522496 and EP 0249918 describe solutions which provide for the application, on a sidewall of the green tyre, of a layer of vulcanizable polymeric material comprising colored or white pigments and the subsequent co-vulcanization of the green tyre and of the layer of polymeric material.

US 2017/0361663 also discloses a method and apparatus for utilizing preprinted labels on a tire. The label has a first side facing away from the tire and a second side connected to the tire. The label's first side is configured to receive at least one adhesive appliqué having at least one indicium.

US 5058647 discloses a method of preparing a pneumatic rubber tire having a decorative design on the sidewall thereof which comprises applying the decorative applique to the sidewall of an uncured tire and curing the tire.

### SUMMARY OF THE INVENTION

Hereinafter, when reference is made to any range of values comprised between a minimum value and a maximum value, the aforementioned minimum and maximum values are considered to be included in the aforementioned range, except where expressly stated otherwise.

Furthermore, all of the ranges include any combination of the maximum and minimum values described and include any intermediate range, even if not specifically expressly described.

Any numerical value is deemed to be preceded by the term "about" to also indicate any numerical value that slightly differs from that described, for example to take into account the dimensional tolerances typical of the field of reference.

Hereinafter the following definitions apply.

The term "equatorial plane" of the tyre is used to indicate a plane perpendicular to the rotation axis of the tyre and that divides the tyre into two symmetrically equal parts.

The terms "radial" and "axial" and the expressions "radially inner/outer" and "axially inner/outer" are used with reference to a direction substantially parallel to the equatorial plane of the tyre and to a direction substantially perpendicular to the equatorial plane of the tyre, respectively, i.e. to a direction substantially perpendicular to the rotation axis of the tyre and to a direction substantially parallel to the rotation axis of the tyre, respectively.

The terms "circumferential" and "circumferentially" are used with reference to the direction of annular extension of the tyre, i.e. to the rolling direction of the tyre, which corresponds to a direction lying on a plane coinciding with or substantially parallel to the equatorial plane of the tyre.

The term "label" is used to indicate an element of low thickness comprising one or more letters, writings, numbers, logos, decals, stripes and similar, joined or separate (also indicated herein as "decorative elements").

The term "elastomeric material" is used to indicate a material comprising a vulcanizable natural or synthetic polymer and a reinforcing filler, wherein such a material, at room temperature and after having been subjected to vulcanization, can undergo deformations caused by a force and is capable of quickly and energetically recovering the substantially original shape and size after the elimination of the deforming force (according to the definitions of standard ASTM D1566-11 Standard Terminology Relating To Rubber).

The expression "non-staining ozone protection system" is used to indicate a system for protecting from ozone which is substantially free from staining agents, typically represented by anti-oxidants, antiozonants, and possible free from waxes and/or other polymeric static protectors.

The amounts of the various components of an elastomeric material are generally provided in phr, where the term phr means parts of component for every hundred parts of elastomeric material net of possible extension oils.

The expression "substantially free" indicates the absence of a certain component or the presence of such a component in an amount comprised between 0 phr and 0.1 phr.

The term "colored" is used to indicate any color, capable of creating a chromatic contrast with the surface of the sidewall.

Hereinafter, when reference is made to "holding in position" a label, reference is made to a type of holding suitable for preventing the movement of the label along any direction lying and not lying on any surface.

Hereinafter, the term "vulcanization" or "vulcanize" will often be used also to refer to the co-vulcanization operations of the elastomeric material of the label and of the elastomeric material of the sidewall of the tyre and to the simultaneous molding operations inside a vulcanization mold.

The Applicant has observed that the application of adhesive labels on the sidewalls of vulcanized tyres has some critical aspects linked to the difficulty in obtaining a good adhesion between the label and the sidewall of the tyre due to the repeated cyclical deformation of the sidewall of the tyre and to the temperature changes that occur during the use of the tyre.

Furthermore, if, as often happens, in operation the sidewall of the tyre comes into contact with a curb, a pavement or other abrasive surfaces, the decorative elements marked on the label easily tend to scratch and become ruined. Similar phenomena can occur during the washing of the vehicle due to the combined action of water and detergents with abrasive agents (brushes and/or sponges).

The Applicant has also observed that the application of adhesive labels on the sidewalls of vulcanized tyres requires a complication of the production steps of the tyre. Indeed, it is necessary to provide suitable stations for gluing the labels to the sidewalls of the tyre and a series of prior operations to that of gluing, like for example cleaning operations of the sidewall of the tyre and setting operations of the aforementioned stations based on the size of the tyre, with consequent decrease in productivity and increase in costs.

According to the Applicant, the aforementioned critical aspects do not occur if the labels are applied on the sidewall of the green tyre, i.e. before the vulcanization of the tyre.

The Applicant has however verified that a direct application of the labels on the green tyre before vulcanization thereof involves critical aspects in terms of repeatability of positioning and deformation of the labels, with unsatisfactory aesthetic and qualitative results.

The Applicant has thus thought to apply the labels on the sidewalls of the tyres during the vulcanization of the tyre.

For this purpose, the Applicant has firstly made labels comprising a layer of colored cross-linkable elastomeric material having physical-chemical features compatible with those of the elastomeric material of the sidewalls of the tyre. The elastomeric material of the labels is suitably selected to ensure the processability (coloring, calendaring, etc....) thereof and the desired resistance to atmospheric agents (solar/UV rays, summer and winter limit temperatures, acid rain, snow, mud, etc.), chemical agents (degreasing agents, solvents, benzene, oils, etc.), and to abrasion (for example after sliding on road curbs, guides of carwash systems, or travel on icy or stony terrain).

The Applicant has also thought to arrange such labels on the vulcanization mold, so as to actuate a co-vulcanization of the green tyre and of the label and transfer the label onto the sidewall of the tyre during the aforementioned co-vulcanization.

The Applicant has also observed that it is necessary that during vulcanization the label keeps its initial shape, so as to avoid having a folded or distorted label on the sidewall of the vulcanized tyre.

The Applicant has also observed that the tyres must have on the sidewalls thereof writing, symbols or marks imposed, for example, by the E.T.R.T.O. (or other analogous organization defining the marking standards) and that, upon defining the areas of the sidewall in which the labels have to be applied, the latter must be applied in the aforementioned areas in a precise and controlled manner, i.e. avoiding even only a partial juxtaposition of the label with the aforementioned writing, symbols or marks during or at the end of the vulcanization.

The Applicant has perceived that for the correct positioning of the label on the sidewall of the vulcanized tyre it is advisable to hold the labels in a predetermined position inside the vulcanization mold at least during the initial part of the vulcanization, when the elastomeric material of the label and of the sidewalls of the green tyre is in a fluid phase.

The present invention therefore relates, in a first aspect thereof, to a process for producing tyres for vehicle wheels according to claim 1.

Preferably, the green tyre also comprises a crossed belt structure radially interposed between the carcass structure and the tread band.

Preferably, the built green tyre also comprises a zero degrees belt layer radially interposed between the crossed belt structure and the tread band.

The Applicant has verified that in the tyres produced with the process described above the labels are arranged in the desired position (which can be selected so as not to interfere with other writing, symbols or marks imposed, for example, by the E.T.R.T.O.) and do not have aesthetic defects. Indoor and outdoor tests carried out by the Applicant on such tyres gave excellent results, without indications of critical aspects in terms of bad positioning, detachment, abrasion or scratching. Moreover, all those processes that it is necessary to provide for after vulcanization when the labels are applied directly on the vulcanized tyres are avoided.

In a second aspect thereof, the invention relates to an apparatus for producing tyres for vehicle wheels according to claim 12.

The aforementioned apparatus allows the actuation of the production process described above.

In at least one of the aforementioned aspects, the present invention can have at least one of the preferred features described hereinafter.

Preferably, said first half-shell is arranged below said second half-shell. Therefore, said first half-shell defines a lower half-shell of the vulcanization mold and said second half-shell defines an upper half-shell of the vulcanization mold.

Preferably, said first support surface is a non-planar surface. Consequently, upon arranging the label on the first support surface the label also takes up a non-planar shape.

For example, said initial part of said co-vulcanization lasts no more than 10 minutes from the start of the co-vulcanization, more preferably no more than 9 minutes, even more preferably no more than 8 minutes from the start of the co-vulcanization.

Preferably, said initial part of said co-vulcanization last until a pressure of 1.5 bar, more preferably of 1 bar, is reached in the vulcanization mold.

Preferably, the elastomeric material of said pair of sidewalls comprises an elastomeric composition comprising (i) at least one elastomeric diene polymer, and (ii) an ozone protection system.

Preferably, said at least one label has a thickness greater than, or equal to, 0.15 mm.

Preferably, said at least one label has a thickness lower than, or equal to, 1.2 mm.

In preferred embodiments thereof, said at least one label has a thickness comprised between 0.15 mm and 1.2 mm.

For example, in an embodiment, the layer of colored cross-linkable elastomeric material of said at least one label comprises (i) 100 phr of elastomeric polymer comprising from 30 to 70 phr of natural and/or synthetic isoprene rubber, and from 30 to 70 phr of a rubber selected from butyl rubber, halogen-butyl rubber, butadiene rubber, styrenebutadiene rubber and mixtures thereof, (ii) from 5 to 120 phr of at least one reinforcing filler, (iii) at least 0.5 phr of at least one coloring agent, (iv) optionally, a non-staining ozone protection system, and v) from 0.5 phr to 10 phr of at least one cross-linking agent.

Preferably, the aforementioned layer of colored cross-linkable elastomeric material has a thickness lower than, or equal to, 0.8 mm, more preferably lower than, or equal to, 0.6 mm, even more preferably lower than, or equal to, 0.5 mm.

Preferably, the aforementioned layer of colored cross-linkable elastomeric material has a thickness greater than, or equal to, 0.1 mm, more preferably greater than, or equal to, 0.2 mm, even more preferably greater than, or equal to, 0.3 mm.

In preferred embodiments, the aforementioned layer of cross-linkable elastomeric material has a thickness comprised between 0.1 mm and 0.8 mm, preferably between 0.2 mm and 0.6 mm, even more preferably between 0.3 mm and 0.5 mm.

Preferably, said at least one label comprises a support film made of plastic material associated with said layer of colored cross-linkable elastomeric material. Such a support film ensures the label not to be deformed when it is handled and moved before vulcanization and displaced during vulcanization.

It is preferable that the support film has a surface roughness similar to that of the support surface on which the label is arranged.

The support film has a low thickness, in order to avoid excessively marking the sidewall of the tyre after vulcanization and to ensure that the label has the necessary flexibility to perfectly match the non-planar surface of the first support surface.

Preferably, the support film has a thickness greater than, or equal to, 0.05 mm, more preferably greater than, or equal to, 0.10 mm, even more preferably greater than, or equal to, 0.20 mm.

Preferably, the support film has a thickness lower than, or equal to, 0.70 mm, more preferably lower than, or equal to, 0.50 mm, even more preferably lower than, or equal to, 0.30 mm.

In preferred embodiments thereof, the support film has a thickness comprised between 0.05 mm and 0.70 mm, preferably between 0.10 mm and 0.50 mmm, even more preferably between 0.20 mm and 0.30 mm.

Preferably, the support film is made of a plastic material capable of withstanding the vulcanization temperatures, generally comprised between 140 °C and 200 °C.

Such a plastic material is selected from the group comprising polyolefin, like polyethylene (PE) (possibly cross-linked) and polypropylene (PP), polyesters, like polyethylene terephthalate (PET) and polyethylene naphthalate (PEN), polyamides, polyimides, perfluorinated polymers, like polytetrafluoroethylene (PTFE), and polyurethanes (PU). More preferably, the plastic material is made of polyethylene terephthalate (PET) or polyamides, like, for example Nylon 6 or Nylon 66.

In some embodiments thereof, said at least one label comprises a bi-adhesive film associated with the support film on the opposite side with respect to said layer of colored cross-linkable elastomeric material.

Preferably, said bi-adhesive film has a thickness greater than, or equal to, 0.01 mm.

Preferably, said bi-adhesive film has a thickness lower than, or equal to, 0.1 mm.

In preferred embodiments thereof, said bi-adhesive film has a thickness comprised between 0.01 mm and 0.1 mm.

In some embodiments thereof, said at least one label comprises an anti-abrasion protective layer arranged between said support film and said layer of colored cross-linkable elastomeric material.

Preferably, said anti-abrasion protective layer comprises cross-linked aliphatic polyurethanes.

In the embodiments in which the label comprises the aforementioned bi-adhesive film, holding in position said at least one label on said first support surface comprises attaching said at least one label to said first support surface through said bi-adhesive film. The bi-adhesive film is therefore selected so as not to allow any movement of the label with respect to the first support surface during the initial part of the vulcanization. It must therefore maintain an adequate adhesive capability in the range of temperatures typically reached during vulcanization, i.e. between 140 °C and 200 °C.

The bi-adhesive film must also have an adhesive capability at the interface with the support film greater than that at the interface with the first support surface, so as to eliminate or limit as much as possible the amount of adhesive film that remains attached to the aforementioned first support surface when the tyre is removed from the vulcanization mold at the end of vulcanization, and in any case to allow an easy removal of the bi-adhesive film from the aforementioned first support surface at the end of vulcanization.

A bi-adhesive film having the aforementioned features is for example the one commercialized by Ritrama S.p.A. with the name 4-GL2B-A1228 Ultracrystalline Clear AP906 Permanent/AP906 Permanent PET30.

In other embodiments thereof, the label does not have aforementioned bi-adhesive film. In this case, holding in position said at least one label on said first support surface comprises activating at least one specifically provided first label holding device.

In a first embodiment, the aforementioned first label holding device comprises a commercially available electrostatic charge device, like for example the Generator of type CM Medium N 230 V/50-60 HZ, with maximum output power equal to 30 kV and whose electrode is of the Pinner 6 Linear Point type, by Simco-lon.

Due to the electrostatic charge produced by such a device and upon applying a predetermined pressure, the label is made to adhere to the first support surface.

Preferably, the voltage used for the generation of the electrostatic charge is comprised between about 20 kV and about 28 kV.

Preferably, during the application of the electrostatic charge the electrostatic charge device is arranged so that its pins are at a distance from the label comprised between about 10 mm and about 150 mm.

For example, in the case in which the label is made of polyethylene terephthalate (PET) and has a thickness of about 1.1 mm, after having charged the labels said predetermined pressure is maintained for a time period comprised between about 3 minutes and about 5 minutes, depending on the type and shape of the label.

In a second embodiment, the aforementioned first label holding device comprises at least one first vacuum suction device.

Preferably, said at least one first vacuum suction device, upon being activated, generates a label holding pressure greater than, or equal to, 1 kPa, preferably greater than, or equal to, 2 kPa, more preferably greater than, or equal to, 5 kPa, even more preferably greater than, or equal to, 10 kPa, even more preferably greater than, or equal to, 20 kPa, preferably lower than, or equal to, about 50 kPa.

According to the invention, arranging said at least one label on said first support surface comprises arranging said at least one label on a second support surface defined in a label transfer member and transferring said at least one label from said second support surface to said first support surface. In this way, the label is arranged on a member that is at room temperature (the aforementioned label transfer member) and thus the label can be subsequently arranged on the support surface defined in the vulcanization mold after the latter has been heated and has reached the correct temperature range, thus without any risk for the operator to get burnt and so as to be able to proceed immediately with vulcanization.

According to the invention, said second support surface has a second surface profile with a shape matching the shape of said first surface profile, so as to obtain a centering of the label transfer member on the first support surface and to avoid undesired movements of the label during the transfer thereof from the second support surface provided in the label transfer member to the first support surface provided in the half-shell of the vulcanization mold.

Preferably, said label transfer member is movable between a distal position away from said first support surface and a proximal position close to said first support surface.

Preferably, said at least one label is held in position on said second support surface through at least one second label holding device which acts on said second support surface.

Preferably, said at least one second label holding device is associated with said label transfer member and is thus movable with the latter.

Preferably, said label transfer member is moved towards said first support surface while said at least one second label holding device is activated, so as to prevent undesired movements of the label on the second support surface.

Preferably, when said label transfer member is at said proximal position said second support surface is arranged at said first support surface.

Preferably, said label transfer member is coupled with said first support surface with a shape coupling between said first surface profile and said second surface profile, so as to precisely position the label on the half-shell of the vulcanization mold.

Preferably, said label transfer member is moved away from said first support surface leaving said at least one label on said first support surface.

Preferably, in order to allow the label to remain on said first support surface, said at least one second label holding device is deactivated after the positioning of the label on the first support surface and before the label transfer member is moved away from the first support surface.

In the preferred embodiments, after having coupled said label transfer member with said first support surface and before deactivating said at least one second label holding device, said at least one first label holding device is activated, so as to hold the label on the first support surface while it is released by the label transfer member.

Preferably, before ending the co-vulcanization of said green tyre and of said at least one label, said at least one first label holding device is deactivated. Such a provision makes it possible, at the end of vulcanization and at the moment of removal of the vulcanized tyre from the vulcanization mold, to prevent the label from staying attached to the half-shell of the vulcanization mold, and at the same time allows air to slip below the label during vulcanization, thereby preventing the formation of air bubbles below the label when it is associated with the half-shell of the vulcanization mold. Such air bubbles would indeed cause undesired deformations of the label and, consequently, aesthetic defects in the vulcanized tyre.

Preferably, said at least one first label holding device is deactivated at the end of the aforementioned initial part of the vulcanization, i.e., as already stated, no more than 10 minutes from the start of vulcanization, more preferably no more than 9 minutes, even more preferably no more than 8 minutes from the start of vulcanization, and in any case when a pressure of 1.5 bar, more preferably of 1 bar has been reached inside the vulcanization mold.

Preferably, said at least one first label holding device is connected to said first support surface.

Preferably, said at least one first label holding device comprises at least one first vacuum suction device.

Preferably, said first support surface comprises a plurality of first holes.

Preferably, said at least one first vacuum suction device is connected to said plurality of first holes.

Preferably, said at least one label is configured to be arranged on said first support surface at a respective first label positioning area.

Preferably, said first label positioning area is not recessed with respect to said first support surface (in other words, the first label positioning area is flush with the first support surface), so that when the label is arranged in said first label positioning area and the vulcanization of the tyre takes place, the label is surrounded by the elastomeric material of the sidewall of the green tyre, thus being impressed in the sidewall of the tyre while remaining flush with the surface of the sidewall.

In preferred embodiments, said first support surface comprises a plurality of first label positioning areas, each configured to receive a respective label.

Preferably, each first label positioning area comprises a plurality of respective first holes. Such respective first holes are grouped so as to provide the respective first label positioning area with a shape which is substantially identical to the shape of the respective label.

Preferably, said at least one first label holding device comprises a plurality of first vacuum suction devices, each connected to a predetermined number of holes of said respective first holes.

Preferably, each first vacuum suction device is connected only to the holes of a predetermined first label positioning area, so as to act each on a respective label and prevent a possible malfunction of one of the aforementioned first vacuum suction devices having a negative impact on the positioning of all of the labels.

Preferably, said second support surface comprises a plurality of second holes.

Preferably, said at least one second label holding device comprises at least one second vacuum suction device.

Preferably, said at least one second label holding device comprises at least one suction cup.

Preferably, each of said second holes is connected to a respective second vacuum suction device.

Preferably, each of said second holes is arranged at a respective suction cup.

Preferably, said second support surface comprises a plurality of second label positioning areas, each for a respective label.

Preferably, each seat of said plurality of second label positioning areas comprises a plurality of respective second holes.

Preferably, a coupling device configured to define a single mutual coupling position between said label transfer member and said first support surface is provided. Such a coupling device allows, in particular, the correct angular positioning of the label transfer member with respect to the first support surface.

Preferably, said coupling device comprises a pin associated with one of said label transfer member and said vulcanization mold and a recess formed on the other of said label transfer member and said vulcanization mold and configured to receive said pin.

Preferably, said recess comprises a flared end portion, so as to guide and facilitate the entry of the pin in the recess.

Preferably, before arranging said at least one label on said first support surface, said at least one label is partially pre-vulcanized. Such a pre-vulcanization makes it possible for example to mold a thin layer of rubber-based inks on the surface of the layer of elastomeric material of the label to make a decorative element.

Preferably, the pre-vulcanization of said at least one label takes place before arranging said at least one label on said second support surface.

Preferably, the pre-vulcanization of said at least one label takes place through application of heat.

In some embodiments, the pre-vulcanization of said at least one label is carried out for a period of at least 1 hour, preferably at least 2 hours, at a temperature equal to or lower than 120 °C, preferably equal to or lower than 110 °C, but equal to or greater than 40 °C, preferably greater than 50 °C, and more preferably greater than 60 °C.

Alternatively, the pre-vulcanization of said at least one label takes place through radiation of UV rays or microwaves.

Preferably, before arranging said at least one label on said first support surface, said at least one label is shaped by removing part of it to define a desired shape. Such a removal can take place with methods known in the field, like for example, by laser ablation or mechanical removal, and it is particularly effective after the pre-vulcanization of the label.

Preferably, the support film is removed from the vulcanized tyre.

### DESCRIPTION OF THE FIGURES

Further features and advantages of the present invention will become clearer from the following detailed description of a preferred embodiment thereof, made with reference to the attached drawings.

In such drawings:
- figure 1 is a schematic view in partial half cross section of a portion of a tyre produced with the process and the apparatus of the present invention;
- figure 2 is an example schematic side view of a tyre produced in accordance with the present invention;
- figure 2a is an enlarged example schematic side view of a colored label provided in the tyre of figure 2;
- figure 3 is a schematic view of a cross section of an apparatus for producing tyres in accordance with the present invention, in an operative configuration thereof;
- figure 4 is a schematic view of a cross section of two constructive components of the apparatus of the present invention in a first operative position;
- figures 5 and 6 are schematic half cross section views of the constructive components of figure 4 in two different operative positions;
- figure 7 is a schematic perspective view of one of the two constructive components of figure 4;
- figure 8 is a schematic perspective view of the other of the two constructive components of figure 4.

### DETAILED DESCRIPTION OF AN EMBODIMENT OF THE INVENTION

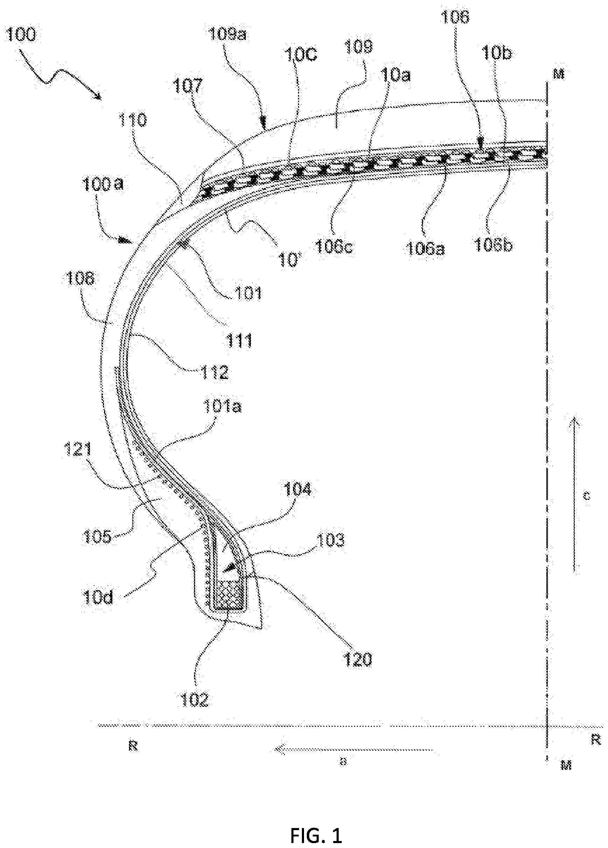

For the sake of simplicity, figure 1 shows only a part of an embodiment of a tyre 100 in accordance with the present invention, the remaining part, which is not shown, being substantially identical and being arranged symmetrically with respect to the equatorial plane M-M of the tyre.

The tyre 100 shown in figure 1 is, in particular, an embodiment of a tyre for four-wheeled vehicles.

Preferably, the tyre 100 is an HP or UHP tyre for sports and/or high or ultra-high performance automobiles.

In figure 1 "a" indicates an axial direction, "c" indicates a radial direction, "M-M" indicates the equatorial plane of the tyre 100 and "R-R" indicates the rotation axis of the tyre 100.

The tyre 100 comprises at least one support structure 100a and, in radially outer position with respect to the support structure 100a, a tread band 109 in elastomeric material.

The support structure 100a comprises a carcass structure 101, in turn comprising at least one carcass layer 111.

Hereinafter, for the sake of simplicity of presentation, reference will be made to an embodiment of the tyre 100 comprising a single carcass layer 111. However, it should be understood that what is described has analogous application in tyres comprising more than one carcass layer.

The carcass layer 111 has axially opposite end edges engaged with respective annular anchoring structures 102, called bead cores, optionally associated with an elastomeric filler 104. The area of the tyre 100 comprising the bead core 102 and the possible elastomeric filler 104 forms an annular reinforcing structure 103 called "bead structure" and intended to allow the tyre 100 to be anchored on a corresponding mounting rim, not shown.

The carcass layer 111 comprises a plurality of reinforcing cords 10' coated with an elastomeric material or incorporated in a matrix of cross-linked elastomeric material.

The carcass structure 101 is of the radial type, i.e. the reinforcing cords 10' are on planes comprising the rotation axis R-R of the tyre 100 and substantially perpendicular to the equatorial plane M-M of the tyre 100.

Each annular reinforcing structure 103 is associated with the carcass structure 101 through folding back (or turning) of the opposite end edges of the at least one carcass layer 111 around the bead core 102 and the possible elastomeric filler 104, so as to form the so-called turnings 101a of the carcass structure 101.

In an embodiment, the coupling between carcass structure 101 and annular reinforcing structure 103 can be made through a second carcass layer (not shown in figure 1) applied in a radially outer position with respect to the carcass layer 111.

An anti-abrasion strip 105 is arranged at each annular reinforcing structure 103 so as to surround the annular reinforcing structure 103 along the axially inner, axially outer and radially inner areas of the annular reinforcing structure 103, thus being arranged between the latter and the rim of the wheel when the tyre 100 is mounted on the rim. Such an anti-abrasion strip 105 may, however, not be provided.

The support structure 100a comprises, in a radially outer position with respect to the carcass structure 101, a crossed belt structure 106 comprising at least two belt layers 106a, 106b arranged radially juxtaposed over one another.

The belt layers 106a, 106b comprise a plurality of reinforcing cords 10a, 10b, respectively. Such reinforcing cords 10a, 10b have an orientation inclined with respect to the circumferential direction of the tyre 100, or to the equatorial plane M-M of the tyre 100, by an angle comprised between 15° and 45°, preferably between 20° and 40°. For example, such an angle is equal to 30°.

The support structure 100a can also comprise a further belt layer (not shown) arranged between the carcass structure 101 and the radially innermost belt layer of the aforementioned belt layers 106a, 106b and comprising a plurality of reinforcing cords having an orientation with respect to the circumferential direction of the tyre 100, or to the equatorial plane M-M of the tyre 100, inclined by an angle equal to 90°.

The support structure 100a can also comprise a further belt layer (not shown) arranged in a radially outer position with respect to the radially outermost belt layer of the aforementioned belt layers 106a, 106b and comprising a plurality of reinforcing cords having an orientation with respect to the circumferential direction of the tyre 100, or to the equatorial plane M-M of the tyre 100, inclined by an angle comprised between 20° and 70°.

The reinforcing cords 10a, 10b of one belt layer 106a, 106b are parallel to one another and have a crossed orientation with respect to the reinforcing cords of the other belt layer 106b, 106a.

In ultra-high performance tyres, the belt structure 106 may be a turned crossed belt structure. Such a belt structure is made by arranging at least one belt layer on a support element and turning the opposite lateral end edges of said at least one belt layer. Preferably, at first a first belt layer is arranged on the support element, then the support element is radially expanded, then a second belt layer is arranged on the first belt layer and finally the opposite axial end edges of the first belt layer are turned on the second belt layer to at least partially cover the second belt layer, which is the radially outermost one. In some cases, a third belt layer can be arranged on the second belt layer. Advantageously, the turning of the axially opposite end edges of a belt layer on another belt layer arranged in a radially outer position imparts greater reactivity and responsiveness to the tyre when entering a bend.

The support structure 100a comprises, in a radially outer position with respect to the crossed belt structure 106, at least one zero-degree reinforcing layer 106c, commonly known as "zero degrees belt". It comprises reinforcing cords 10c oriented in a substantially circumferential direction. Such reinforcing cords 10c thus form an angle of a few degrees (typically less than 10°, for example comprised between 0° and 6°) with respect to the equatorial plane M-M of the tyre 100.

The tread band 109 made of elastomeric material, like other semi-finished products making up the tyre 100, is applied in a radially outer position with respect to the zero-degree reinforcing layer 106c.

Respective sidewalls 108 made of elastomeric material are also applied onto the opposite side surfaces of the carcass structure 101, in an axially outer position with respect to the carcass structure 101 itself. Each sidewall 108 extends from one of the lateral edges of the tread band 109 up to the respective annular reinforcing structure 103.

The anti-abrasion strip 105, if provided, extends at least up to the respective sidewall 108.

In some specific embodiments, such as the one illustrated and described here, the rigidity of the sidewall 108 can be improved by providing a stiffening layer 120, generally known as "flipper" or additional strip-shaped insert, which has the function of increasing the rigidity and integrity of the annular reinforcing structure 103 and of the sidewall 108.

The flipper 120 is wound around a respective bead core 102 and the elastomeric filler 104 so as to at least partially surround the annular reinforcing structure 103. In particular, the flipper 120 surrounds the annular reinforcing structure 103 along the axially inner, axially outer and radially inner areas of the annular reinforcing structure 103.

The flipper 120 is arranged between the turned end edge of the carcass layer 111 and the respective annular reinforcing structure 103. Usually, the flipper 120 is in contact with the carcass layer 111 and the annular reinforcing structure 103.

In some specific embodiments, like the one illustrated and described here, the annular reinforcing structure 103 may also comprise a further stiffening layer 121 that is generally known with the term "chafer", or protective strip, and which has the function of increasing the rigidity and integrity of the annular reinforcing structure 103.

The chafer 121 is associated with a respective turned end edge of the carcass layer 111 in an axially outer position with respect to the respective annular reinforcing structure 103 and extends radially towards the sidewall 108 and the tread band 109.

The flipper 120 and the chafer 121 comprise reinforcing cords 10d (in the attached figures those of the flipper 120 are not visible) coated with an elastomeric material or incorporated in a matrix of cross-linked elastomeric material.

The tread band 109 has, in a radially outer position, a rolling surface 109a intended to come into contact with the ground. Circumferential grooves (not shown in figure 1) are formed on the rolling surface 109a, said grooves being connected by transversal notches (not shown in figure 1) so as to define a plurality of blocks of various shapes and sizes (not shown in figure 1) on the rolling surface 109a.

An underlayer 107 is arranged between the crossed belt structure 106 and the tread band 109.

In some specific embodiments, like the one illustrated and described here, a strip 110 consisting of elastomeric material, commonly known as "mini-sidewall", can optionally be provided in the connection area between the sidewalls 108 and the tread band 109. The mini-sidewall 110 is generally obtained through co-extrusion with the tread band 109 and allows an improvement of the mechanical interaction between the tread band 109 and the sidewalls 108.

Preferably, an end portion of the sidewall 108 directly covers the lateral edge of the tread band 109.

In the case of tubeless tyres, a layer of elastomeric material 112, generally known as "liner", can also be provided in a radially inner position with respect to the carcass layer 111 to provide the necessary impermeability to the inflation air of the tyre 100.

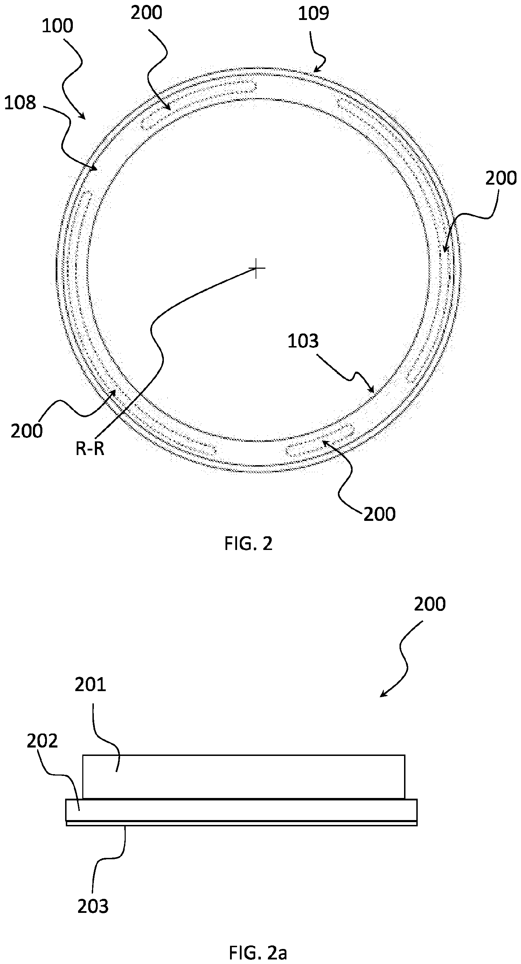

As shown in figure 2, on the outer surface of at least one of the two sidewalls 108 a plurality of colored labels 200 is provided. In the specific case illustrated here, the tyre 100 comprises four labels 200, each one being arc-shaped; two of such labels are identical and diametrically opposite, one has a circumferential dimension smaller than that of the aforementioned two and another has a circumferential dimension which is intermediate with respect to those of the aforementioned labels.

Each label 200 can cover only a part of the sidewall 108 of the tyre 100, like for example in the case illustrated here in which the label 200 comprises drawings, letters, logos, trademarks, decals, or it can cover almost the totality of the sidewall 108, like for example in the case in which the label 200 comprises a layer arranged, in whole or in part, along the cross section of the sidewall 108.

With reference to figure 2a, each label 200 is prepared by applying a layer of colored cross-linkable elastomeric material 201 to a support film 202.

The layer of elastomeric material 201 comprises (i) 100 phr of elastomeric polymer comprising from 30 to 70 phr of natural and/or synthetic isoprene rubber, and from 30 to 70 phr of a rubber selected from butyl rubber, halogen-butyl rubber, butadiene rubber, styrenebutadiene rubber and mixtures thereof, (ii) from 5 to 120 phr of at least one reinforcing filler, (iii) at least 0.5 phr of at least one coloring agent, (iv) preferably, a non-staining ozone protection system and v) from 0.5 phr to 10 phr of at least one cross-linking agent.

The aforementioned layer of elastomeric material 201 has physical-chemical characteristics compatible with those of the elastomeric material of the sidewalls 108. The latter comprises (i) at least one elastomeric diene polymer, and (ii) an ozone protection system.

The layer of elastomeric material 201 has a thickness preferably comprised between 0.1 mm and 0.8 mm, more preferably between 0.2 mm and 0.6 mm, even more preferably between 0.3 mm and 0.5 mm.

The support film 202 is made of a plastic material capable of withstanding temperatures between 140 °C and 200 °C.

Such a plastic material is selected from the group comprising polyolefin, like polyethylene (PE) (possibly cross-linked) and polypropylene (PP), polyesters, like polyethylene terephthalate (PET) and polyethylene naphthalate (PEN), polyamides, polyimides, perfluorinated polymers, like polytetrafluoroethylene (PTFE), and polyurethanes (PU), more preferably polyethylene terephthalate (PET) or polyamides, like, for example Nylon 6 or Nylon 66.

The support film 202 has a thickness preferably comprised between 0.05 mm and 0.70 mm, more preferably between 0.10 mm and 0.50 mm, even more preferably between 0.20 mm and 0.30 mm.

In some embodiments thereof, like for example the one illustrated schematically in figure 2a, the label 200 also comprises a bi-adhesive film 203.

Such a bi-adhesive film 203 is associated with the support film 202 on the opposite side with respect to the layer of elastomeric material 201 and has a thickness preferably comprised between 0.01 mm and 0.1 mm.

The bi-adhesive film 203 is such as to maintain an adequate adhesive capability in the aforementioned range of temperatures (140 °C - 200 °C).

For example, a suitable adhesive film 203 can be the one commercialized by Ritrama S.p.A. with the name 4-GL2B-01228 Ultracrystalline Clear AP906 Permanent/AP906 Permanent PET30.

Each label 200 therefore has a total thickness comprised between 0.15 mm and 1.2 mm.

Each label 200 can comprise an anti-abrasion protective layer (not shown) arranged between the support film 202 and the layer of elastomeric material 201, such an anti-abrasion protective layer comprising cross-linked aliphatic polyurethanes.

A production cycle of the tyre 100 described above comprises, after a building process of a green tyre in which the various components of the tyre 100 are made and/or assembled, a molding and vulcanization process of the green tyre, aimed to define the structure of the tyre 100 according to a desired geometry, normally having a particular tread pattern.

The building of the green tyre can be carried out assembling its respective semi-finished products on a forming support by at least one assembly device.

In particular, on the forming support it is possible to build and/or assemble an inner sleeve comprising the carcass structure 101 of the tyre 100, the annular reinforcing structures 103 and the sidewalls 108. More in particular, the forming support firstly receives the possible liner 112. Then the carcass structure 101 is formed, by depositing the at least one carcass layer 111 and forming the opposite annular reinforcing structures 103. Thereafter, the sidewalls 108 and the anti-abrasion strip 105, if provided, are positioned.

In an auxiliary forming support it is possible to assemble an outer sleeve comprising the belt structure 106, the possible zero degree reinforcing layer 106c and the tread band 109.

Thereafter, the aforementioned outer sleeve is arranged in a coaxially centered and radially outer position with respect to the aforementioned inner sleeve and the green tyre thus assembled is shaped according to a toroidal configuration through radial dilation of the inner sleeve, so as to associate the radially outer surface of the inner sleeve against the radially inner surface of the outer sleeve.

The green tyre thus shaped is subsequently subjected to a molding and vulcanization treatment aimed to determine the structural stabilization of the tyre by cross-linking of the elastomeric material as well as to impress a desired tread pattern on the tread band 109 and to impress the labels 200 at the sidewalls.

For this purpose, the green tyre is arranged in a molding cavity 1a defined inside a vulcanization mold 1 and shaped according to the geometric configuration of the outer surfaces of the tyre 100 to be obtained.

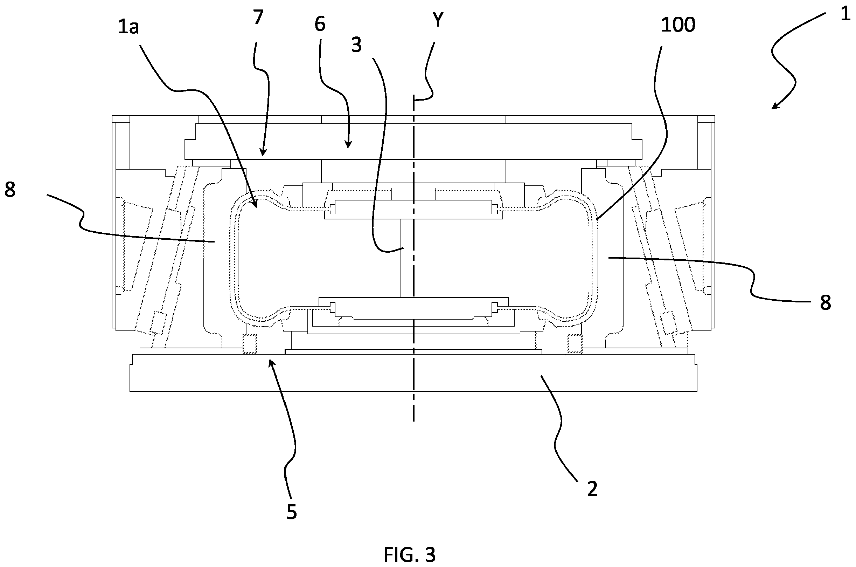

Figure 3 shows the tyre 100 in the final configuration thereof taken up inside the vulcanization mold 1 at the end of the molding and vulcanization operations.

In the vulcanization mold 1 a geometric axis Y is defined that preferably coincides, as shown in figure 3, with the rotation axis of the green tyre when the latter is inserted in the vulcanization mold 1 and with the rotation axis R-R of the tyre 100 obtained at the end of vulcanization.

The vulcanization mold 1 comprises a base block 2 from which a substantially cylindrical central body 3 having an axis coinciding with the axis Y projects at the top.

The central body 3 is preferably of the telescopic type, so that it can be adjusted in height so as to adapt it to green tyres of different sizes.

The base block 2 has a lower annular element 5 fixed to it, centered with respect to the cylindrical central body 3, on which the green tyre is rested when introduced into the vulcanization mold 1, as described hereinafter.

The vulcanization mold 1 further comprises a closure element 6 arranged above the lower annular element 5 and movable with respect to the latter between an open position of the vulcanization mold 1, at which the introduction of the green tyre in the molding cavity 1a takes place, and a closed position of the vulcanization mold 1, at which the molding and vulcanization operations begin.

The lower annular element 5 comprises an inner annular element 50, also called lower half-shell, and an outer annular element 51 arranged around the inner annular element 50 coaxially to the latter.

The lower half-shell 50 is configured to abut on a sidewall of the green tyre when the tyre 1 is rested on the lower annular element 5 of the vulcanization mold 1.

The closure element 6 has an upper annular element 7, also called upper half-shell, fixed to it. The latter is configured to abut on the other sidewall of the green tyre when the vulcanization mold 1 is closed.

The vulcanization mold 1 also comprises a plurality of circumferential sectors 8 configured to air-tightly abut to the lower half-shell 50 and to the upper half-shell 7 when the vulcanization mold 1 is closed.

The circumferential sectors 8 circumscribe the molding cavity 1a and generally carry a plurality of forming projections (not visible in figure 3) configured to create in the tread band a series of notches and grooves 109 suitably arranged according to a desired "tread pattern".

Preferably, the lower and upper half-shells 50, 7 are removable so as to be possibly replaced with half-shells having different diameter and surface profiles so that the remaining structural components of the vulcanization mold 1 can be used with tyres of different diameters and shapes.

Similarly, the circumferential sectors 8 are preferably removable so as to possibly be replaced with circumferential sectors having a different shape and tread pattern.

The surface shape of the lower and upper half-shells 50, 7, at least at a portion thereof, is substantially analogous to that of the sidewalls of the tyre 100.

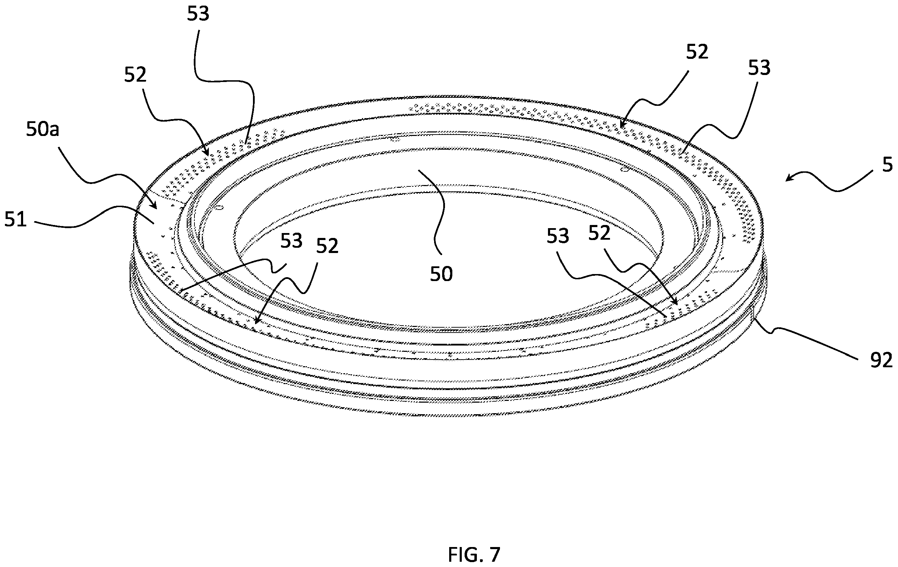

As shown in greater detail in figure 7, the lower half-shell 50 comprises an upper surface 50a, also indicated here as "support surface" as it is intended to act as support for the labels 200 and for the green tyre during the vulcanization of the tyre 100.

The support surface 50a has a non-planar shape and a predetermined surface profile.

In the specific embodiment illustrated here, a plurality of label positioning areas 52 are defined on the aforementioned support surface 50a, each being configured to receive a respective label 200.

The label positioning areas 52 are preferably not recessed with respect to the first support surface 50a and each comprise a plurality of holes 53. In the attached figures, reference numeral 53 is associated with only some of the holes shown in the label positioning areas 52.

The holes 53 of each of the label positioning areas 52 are grouped so as to provide the respective label positioning area 52 with a shape which is substantially identical to the shape of the label 200 that it has to receive.

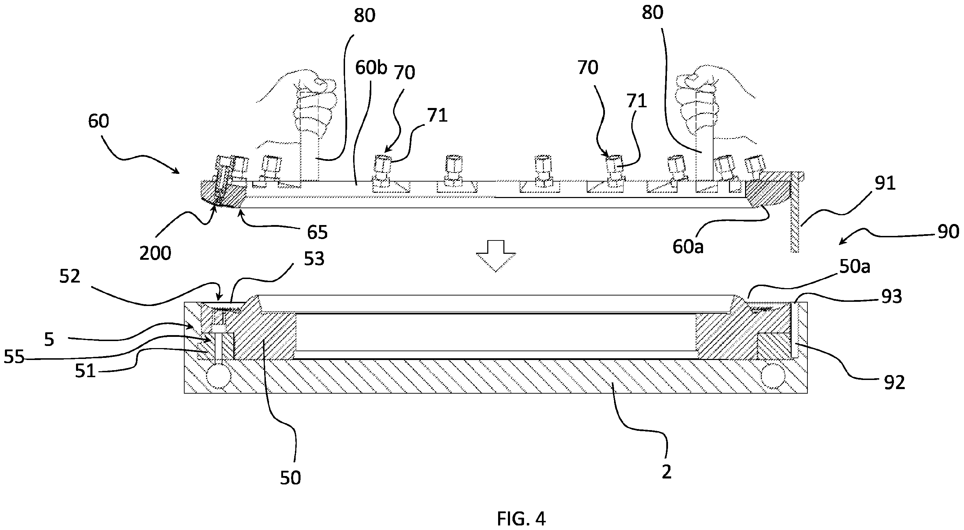

As shown in figures 4-6, all of the holes 53 of each label positioning area 52 are connected to a respective suction device 55 adapted to create the vacuum (herein indicated as "vacuum suction device").

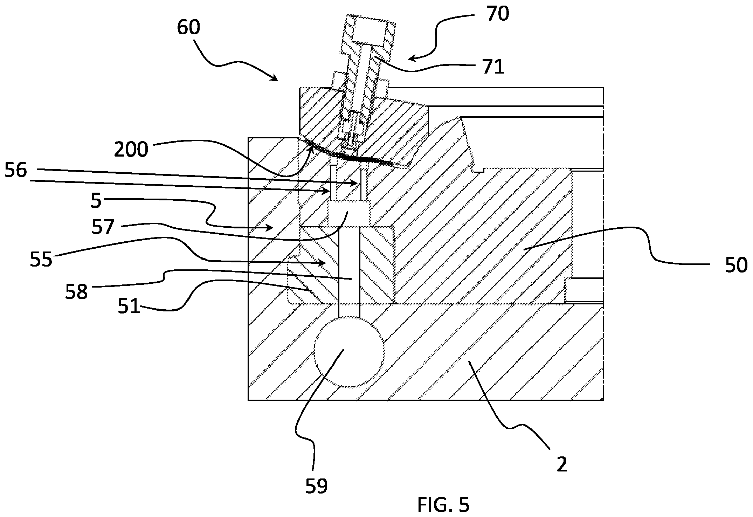

With particular reference to figure 5, each vacuum suction device 55 comprises a plurality of suction channels 56 that connect the holes 53 of each label positioning area 52 to a respective suction chamber 57, which in turn is connected, through respective suction ducts 58, 59, to a respective vacuum pump (not shown) housed in the base block 2.

The suction channels 56 can be formed on suitable inserts (not shown) by removal of material. Such channels have a diameter comprised between 0.1 mm and 0.8 mm each and from 3 to 20 channels per cm² are provided.

Alternatively, the aforementioned channels can consist of lamellar microslots having a thickness comprised between 0.05 mm and 0.8 mm and arranged with a pitch comprised between 0.1 mm and 3 mm.

Preferably, the vacuum suction devices 55, once activated, generate a label holding pressure greater than, or equal to, 1 kPa, preferably greater than, or equal to, 2 kPa, more preferably greater than, or equal to, 5 kPa, even more preferably greater than, or equal to, 10 kPa, even more preferably greater than, or equal to, 20 kPa.

Preferably, the label holding pressure is lower than, or equal to, about 50 kPa.

The positioning of the labels 200 in the label positioning areas 52 defined on the support surface 50a of the lower half-shell 50 of the vulcanization mold 1 preferably follows a prior positioning of the labels 200 in suitable label positioning areas 65 provided on a label transfer member 60 movable between a distal position away from the lower half-shell 50 and a proximal position close to the lower half-shell 50.

The label positioning areas 65 are defined on a support surface 60a defined in the label transfer member 60 and having a profile with a shape matching the shape of the profile of the support surface 50a.

The label transfer member 60 is configured to couple with the lower half-shell 50 through a shape coupling between support surface 60a and support surface 50a.

The movement of the label transfer member 60 from the aforementioned distal position to the aforementioned proximal position can take place for example through manual gripping by two operators of four grip elements 80 suitably provided on the label transfer member 60. As shown in figure 4, such grip elements 80 extend from an upper surface of the label transfer member 60, such a surface being opposite to the aforementioned support surface 60a.

When the label transfer member 60 is in the aforementioned distal position, the labels 200 are arranged on respective label positioning areas 65 suitably provided on the support surface 60a defined in the label transfer member 60, whereas when the label transfer member 60 is in the aforementioned proximal position the labels 200 are transferred from the label transfer member 60 to the label positioning areas 52 provided in the lower half-shell 50 of the vulcanization mold 1.

As shown in figures 4 and 5, the mutual coupling between the label transfer member 60 and the lower half-shell 50 is achieved and guided through a suitable coupling device 90 that, in the embodiment illustrated here, comprises a pin 91 associated with the label transfer member 60 and a recess 92 formed in the lower half-shell 50.

The pin 91 extends from the label transfer member 60 on the opposite side with respect to the grip elements 80.

In the embodiment illustrated here, the recess 92 is formed at the interface between the lower half-shell 50 and the base block 2.

The recess 92 has a top portion 93 that is flared to facilitate the insertion of the pin 91 therein.

During the movement from the aforementioned distal position to the aforementioned proximal position, the labels 200 arranged in the label positioning areas 65 of the label transfer member 60 are held in position through suitable label holding devices 70.

In the embodiment illustrated here, such label holding devices 70 comprise vacuum suction devices 71, in particular vacuum pumps, each connected to a respective hole 66 formed on the support surface 60a of the label transfer member 60 at a respective label positioning area 65.

In the attached figures, the reference numerals 70 and 71 are associated with only some of the label holding devices and of the vacuum suction devices shown, whereas reference numerals 66 are associated with only some of the aforementioned holes.

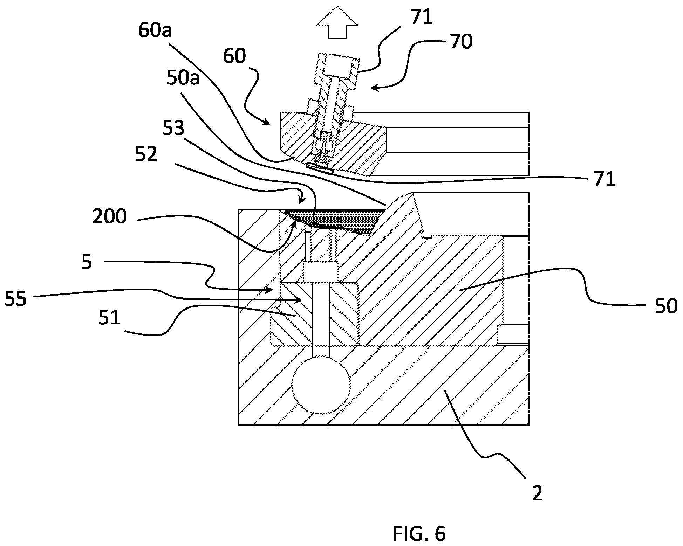

As shown in figure 6, each label holding device 70 can also comprise a respective suction cup 71 projecting from the support surface 60a, such a suction cup 71 being arranged at a respective hole 66.

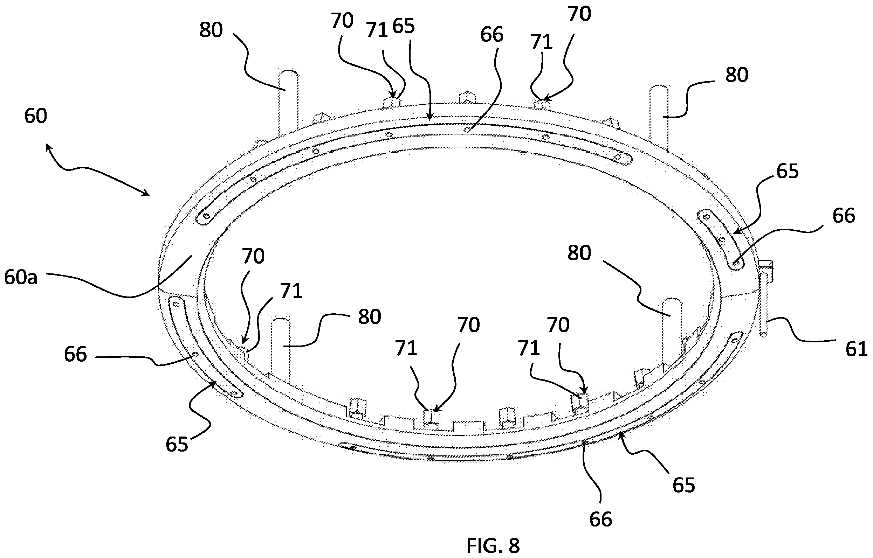

Figure 8 shows that each label positioning area 65 comprises a plurality of holes 66, each associated with a respective label holding device 70. In figure 8 the suction cups 71 have been removed to make the aforementioned holes 66 easier to see.

Once the coupling between the label transfer member 60 and the lower half-shell 50 has been achieved, the vacuum suction devices 71 are deactivated so that the labels 200 can pass from the label positioning areas 65 to the label positioning areas 52 provided in the lower half-shell 50.

In the embodiments in which the labels 200 are not provided with the bi-adhesive film 203, before deactivating the vacuum suction devices 71 the vacuum activation devices 55 are activated.

In the embodiments in which the labels 200 are provided with the bi-adhesive film 203, the lower half-shell 50 of the vulcanization mold 1 can be without the aforementioned holes 53. In this case indeed the passage of the labels from the label positioning areas 65 to the label positioning areas 52 preferably takes place after having exerted a slight pressure of the label transfer member 60 on the lower half-shell 50 and always after having deactivated the vacuum suction devices 71, by the effect of the adhesive action exerted on the label positioning areas 52 by the bi-adhesive film 203. Such pressure may however not be necessary since it is actually exerted due to the weight of the label transfer member 60.

In all the embodiments, preferably, the label transfer member 60 is left rested on the lower half-shell 50 for about a couple of minutes.

Subsequently, the label transfer member 60 can be taken away from the lower half-shell 50, as shown in figure 6. For this purpose, the label transfer member 60, without the labels 200, is taken through the grip elements 80 and transferred into a distal position with respect to the lower half-shell 50.

It is thus possible to proceed to the positioning of the green tyre inside the molding cavity 1a of the vulcanization mold 1.

The green tyre is arranged by resting its sidewall 108 on which the labels 200 have to be applied on the lower half-shell 50, the closure element 6 is closed by making contact with the other sidewall 108 of the green tyre and the circumferential sectors 8 are brought into contact with the tread band 109 of the green tyre, air-tightly abutting on the low and upper half-shells 50, 7.

At this point it is possible to proceed with the vulcanization of the tyre 100. During such vulcanization the vulcanization of the elastomeric layer 201 of the labels 200 also takes place.

An initial part of the vulcanization is carried out while the vacuum suction devices 55 are kept activated, and thus while the labels 200 are held in the respective label positioning areas 52. This happens for a time period no longer than 10 minutes from the start of the co-vulcanization, more preferably no longer than 9 minutes, even more preferably no longer than 8 minutes from the start of the co-vulcanization, and in any case when the pressure inside the vulcanization mold is equal to 1.5 bar, more preferably to 1 bar.

Once this time period has passed the vacuum suction devices 55 can be deactivated and the vulcanization can proceed until the completion thereof.

Before being arranged in the label positioning areas 65 the labels 200 can be partially pre-vulcanized and shaped by removal of material so as to give them the desired shape.

For example, the pre-vulcanization of the labels 200 is carried out for a period of at least 1 hour, preferably at least 2 hours, at a temperature equal to or lower than 120 °C, preferably equal to or lower than 110 °C, but equal to or greater than 40 °C, preferably greater than 50 °C, and more preferably greater than 60 °C.

Once the vulcanization is completed, the vulcanization mold 1 is opened and the vulcanized tyre 100 is removed from the vulcanization mold 1.

Finally, the support films 202 are removed from the sidewall 108 of the tyre 100 at each of the labels 200.

The present invention has been described with reference to some preferred embodiments. Different modifications can be made to the embodiments described above, whilst still remaining within the scope of protection of the invention, defined by the following claims.

## Claims

1. Process for producing tyres (100) for vehicle wheels, comprising:
- building a green tyre comprising a carcass structure (101), a tread band (109) arranged in a radially outer position with respect to the carcass structure (101) and a pair of sidewalls (108) associated with the carcass structure (101) on opposite sides with respect to an equatorial plane (M-M) of the green tyre;
- providing a vulcanization mold (1) comprising a first half-shell (50), a second half-shell (7) opposite said first half-shell (50) and a crown of circumferential sectors (8) configured to air-tightly couple with said first half-shell (50) and second half-shell (7) when said vulcanization mold (1) is closed;
- arranging at least one label (200) comprising a layer of colored cross-linkable elastomeric material (201) in a predetermined position on a first support surface (50a) defined in at least one of said first half-shell (50) and second half-shell (7), said first support surface (50a) having a predetermined first surface profile;
- holding in position said at least one label (200) on said first support surface (50a);
- arranging said green tyre inside said vulcanization mold (1) so that one of the sidewalls (108) of the green tyre rests on said first support surface (50a);
- closing said vulcanization mold (1);
- co-vulcanizing said green tyre and said at least one label (200) inside said vulcanization mold (1), wherein at least one initial part of said co-vulcanization is carried out while said at least one label (200) is held in position on said first support surface (50a);
wherein arranging said at least one label (200) on said first support surface (50a) comprises:
- arranging said at least one label (200) on a second support surface (60a) defined in a label transfer member (60) and having a second surface profile with a shape matching the shape of said first surface profile;
- transferring said at least one label (200) from said second support surface (60a) to said first support surface (50a).

2. Process according to claim 1, wherein said at least one label (200) comprises a support film (202) made of plastic material associated with said layer of colored cross-linkable elastomeric material (201).

3. Process according to claim 2, wherein said at least one label (200) comprises a bi-adhesive film (203) associated with said support film (202) on the opposite side with respect to said layer of colored cross-linkable elastomeric material (201) and wherein holding in position said at least one label (200) on said first support surface (50a) comprises attaching said at least one label (200) to said first support surface (50a) through said bi-adhesive film (203).

4. Process according to claim 1 or 2, wherein said vulcanization mold (1) comprises at least one first label holding device (55) acting on said first support surface (50a) and wherein holding in position said at least one label (200) on said first support surface (50a) comprises activating said at least one first label holding device (55).

5. Process according to claim 4, comprising deactivating said first label holding device (55) when a pressure greater than, or equal to, 1 bar has been reached inside the vulcanization mold (1).

6. Process according to any one of the previous claims, wherein arranging said at least one label (200) on said first support surface (50a) further comprises:
- holding in position said at least one label (200) on said second support surface (60a) through at least one second label holding device (70) associated with said label transfer member (60) and acting on said second support surface (60a);
- moving said label transfer member (60) towards said first support surface (50a) while said at least one second label holding device (70) is active;
- coupling said label transfer member (60) with said first support surface (50a) with a shape coupling between said first surface profile and said second surface profile;
- deactivating said at least one second label holding device (70);
- moving said label transfer member (60) away from said first support surface (50a) leaving said at least one label (200) on said first support surface (50a).

7. Process according to claim 6, wherein said at least one second label holding device (70) comprises at least one second vacuum suction device (71).

8. Process according to claim 6 or 7 when depending on claim 4 or 5, comprising, after having coupled said label transfer member (60) with said first support surface (50a) and before deactivating said at least one second label holding device (70), activating said at least one first label holding device (55).

9. Process according to claim 8, comprising, before ending the co-vulcanization of said green tyre and of said at least one label (200), deactivating said at least one first label holding device (55).

10. Process according to any one of claims 6 to 9 when depending on claim 4 or 5, wherein said at least one first label holding device (55) comprises at least one first vacuum suction device (55).

11. Process according to any one of the previous claims, comprising, before arranging said at least one label (200) on said first support surface (50a), partially pre-vulcanizing said at least one label (200).

12. Apparatus for producing tyres for vehicle wheels, comprising:
- a vulcanization mold (1) comprising a first half-shell (50), a second half-shell (7) opposite to said first half-shell (50) and a crown of circumferential sectors (8) configured to air-tightly couple with said first half-shell (50) and second half-shell (7) when said vulcanization mold (1) is closed, wherein at least one of said first half-shell (50) and second half-shell (7) comprises a first support surface (50a) configured to receive at least one label (200) comprising a layer of colored cross-linkable elastomeric material (201), said first support surface (50a) having a predetermined first surface profile;
- at least one first label holding device (55) configured to hold said at least one label (200) on said first support surface (50a);
- a label transfer member (60) comprising a second support surface (60a) having a second surface profile with a shape matching the shape of said first surface profile.

13. Apparatus according to claim 12, wherein said at least one first label holding device (55) is connected to said first support surface (50a).

14. Apparatus according to claim 13, wherein said first support surface (50a) comprises a plurality of first holes (53) and said at least one first label holding device (55) comprises at least one first vacuum suction device (55) connected to said plurality of first holes (53).

15. Apparatus according to claim 14, wherein said first support surface (50a) comprises a plurality of first label positioning areas (52), each for a respective label (200) and each comprising a plurality of respective first holes (53), and said at least one first label holding device (55) comprises a plurality of first vacuum suction devices (55), each connected to a predetermined number of holes (53) of said respective first holes (53).

16. Apparatus according to any one of claims 12 to 15, wherein said label transfer member (60) is movable between a position distal from said first support surface (50a) and a position proximal to said first support surface (50a) and comprises at least one second label holding device (70) configured to hold said at least one label (200) on said second support surface (60a) during the movement of said label transfer member (60) from said distal position to said proximal position.

17. Apparatus according to any one of claims 12 to 16, wherein said second support surface (60a) comprises a plurality of second holes (66) and said at least one second label holding device (70) comprises at least one second vacuum suction device (71).

18. Apparatus according to claim 17, wherein each of said second holes (66) is connected to a respective second vacuum suction device (71).

19. Apparatus according to claim 17 or 18, wherein said second support surface (60a) comprises a plurality of second label positioning areas (65), each for a respective label (200) and each comprising a plurality of respective second holes (66).

20. Apparatus according to any one of claims 12 to 19, comprising a coupling device (90) configured to define a single mutual coupling position between said label transfer member (60) and said first support surface (50a).

21. Apparatus according to claim 20, wherein said coupling device (90) comprises a pin (91) associated with one of said label transfer member (60) and said vulcanization mold (1) ad a recess (92) formed on the other of said label transfer member (60) and said vulcanization mold (1) and configured to receive said pin (91).

## Patentansprüche

1. Vorgang zum Produzieren von Reifen (100) für Fahrzeugräder, umfassend:
- Bauen eines Reifenrohlings, umfassend eine Gewebeunterbaustruktur (101), ein Laufflächenband (109), das in einer radial äußeren Position in Bezug auf die Gewebeunterbaustruktur (101) angeordnet ist, und ein Paar Seitenwände (108), die der Gewebeunterbaustruktur (101) auf gegenüberliegenden Seiten in Bezug auf eine äquatoriale Ebene (M-M) des Reifenrohlings zugeordnet sind;
- Bereitstellen einer Vulkanisierungsform (1), umfassend eine erste Formhälfte (50), eine zweite Formhälfte (7) gegenüber der ersten Formhälfte (50) und eine Krone von Umfangsbereichen (8), die dazu konfiguriert sind, sich luftdicht mit der ersten Formhälfte (50) und der zweiten Formhälfte (7) zu koppeln, wenn die Vulkanisierungsform (1) geschlossen wird;
- Anordnen wenigstens einer Markierung (200), die eine Schicht eines farbigen vernetzbaren elastischen Polymerisationsprodukts (201) in einer vorbestimmten Position auf einer ersten Stützoberfläche (50a), die in wenigstens einer der ersten Formhälfte (50) und der zweiten Formhälfte (7) definiert ist, wobei die erste Stützoberfläche (50a) ein vorbestimmtes erstes Oberflächenprofil aufweist;
- Inpositionhalten der wenigstens einen Markierung (200) auf der ersten Stützoberfläche (50a);
- Anordnen des Reifenrohlings in der Vulkanisierungsform (1), sodass eine der Seitenwände (108) des Reifenrohlings auf der ersten Stützoberfläche (50a) aufliegt;
- Schließen der Vulkanisierungsform (1);
- Co-Vulkanisieren des Reifenrohlings und der wenigstens einen Markierung (200) in der Vulkanisierungsform (1), wobei wenigstens ein anfänglicher Teil des Co-Vulkanisierens ausgeführt wird, während die wenigstens eine Markierung (200) auf der ersten Stützoberfläche (50a) in Position gehalten wird; wobei das Anordnen der wenigstens einen Markierung (200) auf der ersten Stützoberfläche (50a) umfasst:
- Anordnen der wenigstens einen Markierung (200) auf einer zweiten Stützoberfläche (60a), die in einem Markierungsübertragungselement (60) definiert ist und ein zweites Oberflächenprofil mit einer Form aufweist, die mit der Form des ersten Oberflächenprofils übereinstimmt;
- Übertragen der wenigstens einen Markierung (200) von der zweiten Stützoberfläche (60a) auf die erste Stützoberfläche (50a) .

2. Vorgang nach Anspruch 1, wobei die wenigstens eine Markierung (200) eine Stützfolie (202) umfasst, die aus plastischem Stoff hergestellt ist, der der Schicht des farbigen vernetzbaren elastischen Polymerisationsprodukts (201) zugeordnet ist.

3. Vorgang nach Anspruch 2, wobei die wenigstens eine Markierung (200) eine doppelklebrige Folie (203) umfasst, die der ersten Stützfolie (202) auf der gegenüberliegenden Seite in Bezug auf die erste Schicht des farbigen vernetzbaren elastischen Polymerisationsprodukts (201) zugeordnet ist und wobei das Inpositionhalten der wenigstens einen Markierung (200) auf der ersten Stützoberfläche (50a) das Befestigen der wenigstens einen Markierung (200) auf der ersten Stützoberfläche (50a) durch die doppelklebrige Folie (203) umfasst.

4. Vorgang nach Anspruch 1 oder 2, wobei die Vulkanisierungsform (1) wenigstens eine erste Markierungshaltevorrichtung (55) umfasst, die auf die erste Stützoberfläche (50a) einwirkt und wobei das Inpositionhalten der wenigstens einen Markierung (200) auf der ersten Stützoberfläche (50a) das Aktivieren der wenigstens einen ersten Markierungshaltevorrichtung (55) umfasst.

5. Vorgang nach Anspruch 4, umfassend das Deaktivieren der ersten Markierungshaltevorrichtung(55), wenn ein Druck, der größer oder gleich 1 Bar ist, in der Vulkanisierungsform (1) erreicht worden ist.

6. Vorgang nach einem der vorhergehenden Ansprüche, wobei das Anordnen der wenigstens einen Markierung (200) auf der ersten Stützoberfläche (50a) ferner umfasst:
- Inpositionhalten der wenigstens einen Markierung (200) auf der zweiten Stützoberfläche (60a) durch wenigstens eine zweite Markierungshaltevorrichtung (70), die dem Markierungsübertragungselement (60) zugeordnet ist und auf die zweite Stützoberfläche (60a) wirkt;
- Bewegen des Markierungsübertragungselement (60) in Richtung der ersten Stützoberfläche (50a), während die wenigstens eine zweite Markierungshaltevorrichtung (70) aktiv ist;
- Koppeln des Markierungsübertragungselements (60) mit der ersten Stützoberfläche (50a) mit einer Formkopplung zwischen dem ersten Oberflächenprofil und dem zweiten Oberflächenprofil;
- Deaktivieren der wenigstens einen zweiten Markierungshaltevorrichtung (70);
- Bewegen des Markierungsübertragungselement (60) von der ersten Stützoberfläche (50a) weg, wobei wenigstens eine Markierung (200) auf der ersten Stützoberfläche (50a) zurückgelassen wird.

7. Vorgang nach Anspruch 6, wobei die wenigstens eine zweite Markierungshaltevorrichtung (70) wenigstens eine zweite Vakuumsaugvorrichtung (71) umfasst.

8. Vorgang nach Anspruch 6 oder 7, wenn abhängig von Anspruch 4 oder 5, umfassend, nachdem das Markierungsübertragungselement (60) mit der ersten Stützoberfläche (50a) gekoppelt wurde und vor dem Deaktivieren der wenigstens einen zweiten Markierungshaltevorrichtung (70), das Aktivieren der wenigstens einen ersten Markierungshaltevorrichtung (55).

9. Vorgang nach Anspruch 8, umfassend vor dem Enden des Co-Vulkanisierens des Reifenrohlings und der ersten Markierung (200) Deaktivieren der wenigstens einen ersten Markierungshaltevorrichtung (55).

10. Vorgang nach einem der Ansprüche 6 bis 9, wenn abhängig von Anspruch 4 oder 5, wobei die wenigstens eine erste Markierungshaltevorrichtung (55) wenigstens eine erste Vakuumsaugvorrichtung (55) umfasst.

11. Vorgang nach einem der vorhergehenden Ansprüche, umfassend vor dem Anordnen der wenigstens einen Markierung (200) auf der ersten Stützoberfläche (50a) das teilweise Vorvulkanisieren der wenigstens einen Markierung (200).

12. Einrichtung zum Produzieren von Reifen für Fahrzeugräder, umfassend:
- eine Vulkanisierungsform (1), umfassend eine erste Formhälfte (50), eine zweite Formhälfte (7) gegenüber der ersten Formhälfte (50) und eine Krone von Umfangsbereichen (8), die dazu konfiguriert sind, sich luftdicht mit der ersten Formhälfte (50) und der zweiten Formhälfte (7) zu koppeln, wenn die Vulkanisierungsform (1) geschlossen wird, wobei wenigstens eine der ersten Formhälfte (50) und der zweiten Formhälfte (7) eine erste Stützoberfläche (50a) umfasst, die dazu konfiguriert ist, wenigstens eine Markierung (200) aufzunehmen, die eine Schicht eines farbigen vernetzbaren elastischen Polymerisationsprodukts (201) umfasst, wobei die erste Stützoberfläche (50a) ein vorbestimmtes erstes Oberflächenprofil aufweist;
- wenigstens eine erste Markierungshaltevorrichtung (55), die dazu konfiguriert ist, die wenigstens eine Markierung (200) auf der ersten Stützoberfläche (50a) zu halten;
- ein Markierungsübertragungselement (60), umfassend eine zweite Stützoberfläche (60a), die ein zweites Oberflächenprofil mit einer Form aufweist, die mit der Form des ersten Oberflächenprofils übereinstimmt.

13. Einrichtung nach Anspruch 12, wobei die wenigstens eine Markierungshaltevorrichtung (55) mit der ersten Stützoberfläche (50a) verbunden ist.

14. Einrichtung nach Anspruch 13, wobei die erste Stützoberfläche (50a) eine Mehrzahl von ersten Löchern (53) umfasst und die wenigstens eine erste Markierungshaltevorrichtung (55) wenigstens eine erste Vakuumsaugvorrichtung (55) umfasst, die mit der Mehrzahl von ersten Löchern (53) verbunden ist.

15. Einrichtung nach Anspruch 14, wobei die erste Stützoberfläche (50a) eine Mehrzahl von ersten Markierungspositionierungsflächen (52) jeweils für eine jeweilige Markierung (200) umfasst und jede eine Mehrzahl von jeweiligen ersten Löchern (53) umfasst, und die wenigstens eine erste Markierungshaltevorrichtung (55) eine Mehrzahl von ersten Vakuumsaugvorrichtungen (55) umfasst, die jeweils mit einer vorbestimmten Anzahl von Löchern (53) der jeweiligen ersten Löcher (53) verbunden sind.

16. Einrichtung nach einem der Ansprüche 12 bis 15, wobei das Markierungsübertragungselement (60) zwischen einer Position distal von der ersten Stützoberfläche (50a) und einer Position proximal zu der ersten Stützoberfläche (50a) beweglich ist und wenigstens eine zweite Markierungshaltevorrichtung (70) umfasst, die dazu konfiguriert ist, die wenigstens eine Markierung (200), während der Bewegung des Markierungsübertragungselements (60) von der distalen Position in die proximale Position, auf der zweiten Stützoberfläche (60a) zu halten.

17. Einrichtung nach einem der Ansprüche 12 bis 16, wobei die zweite Stützoberfläche (60a) eine Mehrzahl von zweiten Löchern (66) umfasst und die wenigstens eine zweite Markierungshaltevorrichtung (70) wenigstens eine zweite Vakuumsaugvorrichtung (71) umfasst.

18. Einrichtung nach Anspruch 17, wobei jedes der zweiten Löcher (66) mit einer jeweiligen zweiten Vakuumsaugvorrichtung (71) verbunden ist.

19. Einrichtung nach Anspruch 17 oder 18, wobei die zweite Stützoberfläche (60a) eine Mehrzahl von zweiten Markierungspositionierungsflächen (65) jeweils für eine jeweilige Markierung (200) umfasst und die jeweils eine Mehrzahl von jeweiligen zweiten Löchern (66) umfasst.

20. Einrichtung nach einem der Ansprüche 12 bis 19, umfassend eine Kopplungsvorrichtung (90), die dazu konfiguriert ist, eine einzelne, gegenseitige Kopplungsposition zwischen dem Markierungsübertragungselement (60) und der ersten Stützoberfläche (50a) zu definieren.

21. Einrichtung nach Anspruch 20, wobei die Kopplungsvorrichtung (90) einen Stift (91) umfasst, der einem/einer des Markierungsübertragungselements (60) und der Vulkanisierungsform (1) und einer Vertiefung (92) zugeordnet ist, die auf dem/der anderen des Markierungsübertragungselements (60) und der Vulkanisierungsform (1) ausgebildet ist und dazu konfiguriert ist, den Stift (91) aufzunehmen.

## Revendications

1. Procédé de fabrication de pneus (100) pour roues de véhicule, comprenant :
- la construction d'un pneu cru comprenant une structure de carcasse (101), une bande de roulement (109) agencée dans une position radialement extérieure par rapport à la structure de carcasse (101) et une paire de flancs (108) associés à la structure de carcasse (101) sur des côtés opposés par rapport à un plan équatorial (M-M) du pneu cru ;
- la fourniture d'un moule de vulcanisation (1) comprenant une première demi-coque (50), une deuxième demi-coque (7) opposée à ladite première demi-coque (50) et une couronne de secteurs circonférentiels (8) configurée pour s'accoupler de manière étanche avec lesdites première demi-coque (50) et deuxième demi-coque (7) lorsque ledit moule de vulcanisation (1) est fermé ;
- l'agencement d'au moins une étiquette (200) comprenant une couche de matériau élastomère réticulable coloré (201) dans une position prédéterminée sur une première surface de support (50a) définie dans au moins l'une desdites première demi-coque (50) et deuxième demi-coque (7), ladite première surface de support (50a) ayant un premier profil de surface prédéterminé ;
- le maintien en position de ladite au moins une étiquette (200) sur ladite première surface de support (50a) ;
- l'agencement dudit pneu cru à l'intérieur dudit moule de vulcanisation (1) de sorte qu'un des flancs (108) du pneu cru repose sur ladite première surface de support (50a) ;
- la fermeture dudit moule de vulcanisation (1) ;
- la co-vulcanisation dudit pneu cru et de ladite au moins une étiquette (200) à l'intérieur dudit moule de vulcanisation (1), dans lequel au moins une partie initiale de ladite co-vulcanisation est effectuée tandis que ladite au moins une étiquette (200) est maintenue en position sur ladite première surface de support (50a) ;
dans lequel l'agencement de ladite au moins une étiquette (200) sur ladite première surface de support (50a) comprend :
- l'agencement de ladite au moins une étiquette (200) sur une deuxième surface de support (60a) définie dans un élément de transfert d'étiquette (60) et ayant un deuxième profil de surface avec une forme correspondant à la forme dudit premier profil de surface ;
- le transfert de ladite au moins une étiquette (200) de ladite deuxième surface de support (60a) à ladite première surface de support (50a).

2. Procédé selon la revendication 1, dans lequel ladite au moins une étiquette (200) comprend un film de support (202) en matière plastique associé à ladite couche de matériau élastomère réticulable coloré (201).

3. Procédé selon la revendication 2, dans lequel ladite au moins une étiquette (200) comprend un film bi-adhésif (203) associé audit film de support (202) du côté opposé par rapport à ladite couche de matériau élastomère réticulable coloré (201) et dans lequel le maintien en position de ladite au moins une étiquette (200) sur ladite première surface de support (50a) comprend la fixation de ladite au moins une étiquette (200) sur ladite première surface de support (50a) à travers ledit film bi-adhésif (203).

4. Procédé selon la revendication 1 ou 2, dans lequel ledit moule de vulcanisation (1) comprend au moins un premier dispositif de maintien d'étiquette (55) agissant sur ladite première surface de support (50a) et dans lequel le maintien en position de ladite au moins une étiquette (200) sur ladite première surface de support (50a) comprend l'activation dudit au moins un premier dispositif de maintien d'étiquette (55).

5. Procédé selon la revendication 4, comprenant la désactivation dudit premier dispositif de maintien d'étiquette (55) lorsqu'une pression supérieure ou égale à 1 bar a été atteinte à l'intérieur du moule de vulcanisation (1).

6. Procédé selon l'une quelconque des revendications précédentes, dans lequel l'agencement de ladite au moins une étiquette (200) sur ladite première surface de support (50a) comprend en outre :
- le maintien en position de ladite au moins une étiquette (200) sur ladite deuxième surface de support (60a) par l'intermédiaire d'au moins un deuxième dispositif de maintien d'étiquette (70) associé audit élément de transfert d'étiquette (60) et agissant sur ladite deuxième surface de support (60a) ;
- le déplacement dudit élément de transfert d'étiquette (60) vers ladite première surface de support (50a) pendant que ledit au moins un deuxième dispositif de maintien d'étiquette (70) est actif ;
- l'accouplement dudit élément de transfert d'étiquette (60) avec ladite première surface de support (50a) avec un accouplement de forme entre ledit premier profil de surface et ledit deuxième profil de surface ;
- la désactivation dudit au moins un deuxième dispositif de maintien d'étiquette (70) ;
- l'éloignement dudit élément de transfert d'étiquette (60) de ladite première surface de support (50a) en laissant ladite au moins une étiquette (200) sur ladite première surface de support (50a).

7. Procédé selon la revendication 6, dans lequel ledit au moins un deuxième dispositif de maintien d'étiquette (70) comprend au moins un deuxième dispositif d'aspiration sous vide (71).

8. Procédé selon la revendication 6 ou 7 lorsqu'elle dépend de la revendication 4 ou 5, comprenant, après avoir accouplé ledit élément de transfert d'étiquette (60) avec ladite première surface de support (50a) et avant la désactivation dudit au moins un deuxième dispositif de maintien d'étiquette (70), l'activation dudit au moins un premier dispositif de maintien d'étiquette (55).

9. Procédé selon la revendication 8, comprenant, avant la finalisation de la co-vulcanisation dudit pneu cru et de ladite au moins une étiquette (200), la désactivation dudit au moins un premier dispositif de maintien d'étiquette (55).

10. Procédé selon l'une quelconque des revendications 6 à 9 lorsqu'elles dépendent de la revendication 4 ou 5, dans lequel ledit au moins un premier dispositif de maintien d'étiquette (55) comprend au moins un premier dispositif d'aspiration sous vide (55).

11. Procédé selon l'une quelconque des revendications précédentes, comprenant, avant l'agencement de ladite au moins une étiquette (200) sur ladite première surface de support (50a), la pré-vulcanisation partielle de ladite au moins une étiquette (200).

12. Appareil de fabrication de pneus pour roues de véhicules, comprenant :
- un moule de vulcanisation (1) comprenant une première demi-coque (50), une deuxième demi-coque (7) opposée à ladite première demi-coque (50) et une couronne de secteurs circonférentiels (8) configurés pour s'accoupler de manière étanche avec lesdites première demi-coque (50) et deuxième demi-coque (7) lorsque ledit moule de vulcanisation (1) est fermé, dans lequel au moins l'une desdites première demi-coque (50) et deuxième demi-coque (7) comprend une première surface de support (50a) configurée pour recevoir au moins une étiquette (200) comprenant une couche de matériau élastomère réticulable coloré (201), ladite première surface de support (50a) ayant un premier profil de surface prédéterminé ;
- au moins un premier dispositif de maintien d'étiquette (55) configuré pour maintenir ladite au moins une étiquette (200) sur ladite première surface de support (50a) ;
- un élément de transfert d'étiquette (60) comprenant une deuxième surface de support (60a) ayant un deuxième profil de surface avec une forme correspondant à la forme dudit premier profil de surface.

13. Appareil selon la revendication 12, dans lequel ledit au moins un premier dispositif de maintien d'étiquette (55) est relié à ladite première surface de support (50a).

14. Appareil selon la revendication 13, dans lequel ladite première surface de support (50a) comprend une pluralité de premiers trous (53) et ledit au moins un premier dispositif de maintien d'étiquette (55) comprend au moins un premier dispositif d'aspiration sous vide (55) relié à ladite pluralité de premiers trous (53).

15. Appareil selon la revendication 14, dans lequel ladite première surface de support (50a) comprend une pluralité de premières zones de positionnement d'étiquette (52), chacune pour une étiquette respective (200) et chacune comprenant une pluralité de premiers trous respectifs (53), et ledit au moins un premier dispositif de support d'étiquette (55) comprend une pluralité de premiers dispositifs d'aspiration sous vide (55), connectés chacun à un nombre prédéterminé de trous (53) desdits premiers trous respectifs (53).

16. Appareil selon l'une quelconque des revendications 12 à 15, dans lequel ledit élément de transfert d'étiquette (60) est mobile entre une position distale de ladite première surface de support (50a) et une position proximale de ladite première surface de support (50a) et comprend au moins un deuxième dispositif de maintien d'étiquette (70) configuré pour maintenir ladite au moins une étiquette (200) sur ladite deuxième surface de support (60a) pendant le mouvement dudit élément de transfert d'étiquette (60) de ladite position distale à ladite position proximale.

17. Appareil selon l'une quelconque des revendications 12 à 16, dans lequel ladite deuxième surface de support (60a) comprend une pluralité de deuxièmes trous (66) et ledit au moins un deuxième dispositif de maintien d'étiquette (70) comprend au moins un deuxième dispositif d'aspiration sous vide (71).

18. Appareil selon la revendication 17, dans lequel chacun desdits deuxièmes trous (66) est relié à un deuxième dispositif d'aspiration sous vide respectif (71).

19. Appareil selon la revendication 17 ou 18, dans lequel ladite deuxième surface de support (60a) comprend une pluralité de deuxièmes zones de positionnement d'étiquette (65), chacune pour une étiquette respective (200) et chacune comprenant une pluralité de deuxièmes trous respectifs (66).

20. Appareil selon l'une quelconque des revendications 12 à 19, comprenant un dispositif d'accouplement (90) configuré pour définir une seule position d'accouplement mutuel entre ledit élément de transfert d'étiquette (60) et ladite première surface de support (50a).

21. Appareil selon la revendication 20, dans lequel ledit dispositif d'accouplement (90) comprend une broche (91) associée à l'un dudit élément de transfert d'étiquette (60) et dudit moule de vulcanisation (1) et un évidement (92) formé sur l'autre dudit élément de transfert d'étiquette (60) et dudit moule de vulcanisation (1) et configuré pour recevoir ladite broche (91).
